# EUROPÄISCHE PATENTSCHRIFT

(11) **EP 2 130 275 B1**
(45) Veröffentlichungstag und Bekanntmachung des Hinweises auf die Patenterteilung: **13.04.2016**
(21) Anmeldenummer: 08708254.1
(22) Anmeldetag: 28.01.2008
(51) Int. Cl.: H02H 3/32

(54) **FEHLERERKENNUNG IN EINEM STEUERGERÄT**
ERROR RECOGNITION IN A CONTROL UNIT
DÉTECTION D'ERREUR DANS UN APPAREIL DE COMMANDE

(30) Priorität: 26.03.2007 DE 10714335
(43) Veröffentlichungstag der Anmeldung: 09.12.2009
(73) Patentinhaber: Robert Bosch GmbH, 70442 Stuttgart (DE)
(72) Erfinder: KNAB, Norbert, 77767 Appenweier (DE); SCHULZE-ICKING-KONERT, Georg, 77830 Buehlertal (DE); MOHR, Thomas, 77830 Buehlertal (DE); KOTTHAUS, Stefan, 76547 Sinzheim (DE); HABERL, Nikolas, 76547 Sinzheim (DE); MUELLER, Michael, 71277 Rutesheim (DE)
(86) Internationale Anmeldenummer: PCT/EP2008/050931
(87) Internationale Veröffentlichungsnummer: WO 2008/116676

(56) Entgegenhaltungen:
- US-A- 5 539 602

## Beschreibung

Die Erfindung betrifft eine Fehlererkennung in einer elektrischen Baugruppe mit einem Steuergerät und einem Verbraucher, wobei sowohl Fehler im Steuergerät als auch im Verbraucher erkannt werden können.

In US 5,539,602 A ist eine Fehlererkennungsvorrichtung zum Erkennen eines Fehlers in einem elektrischen Verbraucher mit einem ersten Detektor und einem zweiten Detektor zum detektieren von Stromflüssen in einem Verbraucher und einer Auslöseeinheit offenbart.

Um elektrische Systeme gegen Überhitzung zu schützen, werden üblicherweise Schmelzsicherungen verwendet, die den Stromfluss in einem stromführenden Leiter unterbrechen, wenn ein Kurzschluss auftritt oder ein unzulässig hoher Strom fließt und/oder die Umgebungstemperatur der entsprechenden Baugruppe eine Grenztemperatur übersteigt. Darüber hinaus können Fehlerfälle auftreten, bei denen in einem Steuergerät der elektrischen Baugruppe ein Leckstrom oder ein sonstiger Strom fließt, der nicht durch den an dem Steuergerät angeschlossenen Verbraucher fließt. Solche Fehlerströme innerhalb des Steuergeräts führen möglicherweise nicht zu einem Auslösen der Schmelzsicherung, können jedoch das Steuergerät überhitzen oder auf sonstige Weise Schäden im Steuergerät, in der elektrischen Baugruppe oder in der Endanwendung, die in die elektrische Baugruppe eingebaut ist, hervorrufen.

Daher ist es notwendig, auch Fehler in der elektrischen Baugruppe zu erkennen, die nicht zwangsläufig zu einem Stromfluss in den Zuführungsleitungen führt, der z.B. über dem maximal zulässigen Strom liegt und somit zu einem sofortigen Auslösen der Schmelzsicherung führen würde.

Eine Überhitzung der Baugruppe kann bereits weit unterhalb des maximalen Betriebsstroms erfolgen, wenn Heizleistung im Steuergerät frei wird. Dies würde jedoch von einer Schmelzsicherung nur verzögert erkannt, insbesondere wenn diese außerhalb des Steuergeräts angeordnet ist. Zum Vermeiden von Schäden ist es daher sinnvoll, einen möglichen Fehler schneller zu detektieren.

Es ist Aufgabe der vorliegenden Erfindung, eine Fehlererkennungsvorrichtung zum zuverlässigen Detektieren von Fehlerfällen in einer elektrischen Baugruppe zur Verfügung zu stellen, bei denen eine Überhitzung auftreten kann, auch wenn der zugeführte Strom den zulässigen Maximalstrom nicht übersteigt. Weiterhin sollen durch die Vorrichtung Fehlerfälle entdeckt werden, bevor eine Überhitzung insbesondere des Steuergeräts auftreten kann. Zudem sollen auch Fehlerfälle erkannt werden, die zu hohen Strömen führen, jedoch keine überhitzung in der Baugruppe zur Folge haben, wie z.B. einen harten Kurzschluss in dem Steuergerät oder dem Verbraucher.

Diese Aufgabe wird durch ein elektrisches System mit einer Fehlererkennungsvorrichtung, einem Steuergerät und einem Verbraucher gemäß Anspruch 1 sowie einer Verwendung einer Fehlererkennungsvorrichtung in einer elektrischen Baugruppe gemäß Anspruch 7 gelöst.

Erfindungsgemäß ist ein elektrisches System, umfassend eine elektrische Baugruppe mit einem Verbraucher, einem Steuergerät zum Ansteuern des Verbrauchers und eine Fehlererkennungsvorrichtung zum Erkennen eines Fehlers in einer elektrischen Baugruppe, vorgesehen. Die Fehlererkennungsvorrichtung umfasst einen ersten Detektor und einen zweiten Detektor zum Detektieren einer Angabe über Stromflüsse sowie eine Auslöseeinheit, um abhängig von den Angaben über die detektierten Stromflüsse mit Hilfe eines Schalters einen Stromfluss durch die elektrische Baugruppe zu unterbrechen. Weiterhin ist der erste Detektor auf einem ersten Strompfad von dem Steuergerät zu dem Verbraucher vor dem Steuergerät angeordnet und der zweite Detektor ist in einem zweiten Strompfad von dem Verbraucher zu dem Steuergerät zwischen dem Verbraucher und dem Steuergerät angeordnet.

Weitere vorteilhafte Ausgestaltungen der Erfindung sind in den abhängigen Ansprüchen angegeben.

Die Fehlererkennungsvorrichtung eignet sich insbesondere für den Einsatz zur Überwachung von Baugruppen mit einem Steuergerät und einem Verbraucher, wobei der Verbraucher von dem Steuergerät angesteuert wird, z.B. über die Leistung oder gemäß einem Einschalt bzw. Ausschaltverhalten und dergleichen Fehlern

Weiterhin kann die Auslöseeinheit einen Vergleicher umfassen, um die Angaben über die detektierten Stromflüsse miteinander zu vergleichen und abhängig von einer Differenz der detektierten Stromflüsse den Stromfluss durch die elektrische Baugruppe zu unterbrechen, und kann weiterhin einen Integrator umfassen, um das Ergebnis des Vergleichens zu integrieren, so dass der Schalter mit einer Tiefpass gefilterten Steuergröße angesteuert wird.

Gemäß einer Ausführungsform kann der erste und/oder zweite Detektor einen Shunt aufweisen, durch den der zu messende Stromfluss geleitet wird, um eine von dem Stromfluss abhängige Messspannung bereitzustellen, wobei die jeweilige Messspannung der Auslöseeinheit bereitgestellt wird.

Weiterhin kann der erste und/oder zweite Detektor in der Auslöseeinheit angeordnet sein.

Mindestens eines der Elemente, der erste Detektor, der zweite Detektor und die Auslöseeinheit, können in dem Steuergerät vorgesehen sein, um eine integrierte Aufbauweise zu ermöglichen.

Weiterhin kann das Steuergerät über eine erste Anschlussleitung mit einem ersten Gleichspannungspotential und über eine zweite Anschlussleitung mit einem zweiten Gleichspannungspotential verbunden sein. Der Verbraucher ist mit dem Steuergerät über eine erste Verbindungsleitung und über eine zweite Verbindungsleitung verbunden, wobei ein Steuermodul vorgesehen ist, um elektrische Leistung an den Verbraucher anzulegen. Die erste Anschlussleitung und die erste Verbindungsleitung sind direkt über das Steuergerät miteinander verbunden, wobei der erste Detektor in der zweiten Anschlussleitung angeordnet ist und der zweite Detektor in der ersten Verbindungsleitung angeordnet ist.

Weiterhin ist erfindungsgemäß die Verwendung der Fehlererkennungsvorrichtung in einer elektrischen Baugruppe vorgesehen. Diese umfasst einen Verbraucher und ein Steuergerät zum Ansteuern des Verbrauchers, wobei der erste Detektor auf einem ersten Strompfad von dem Steuergerät zu dem Verbraucher vor dem Steuergerät angeordnet wird, wobei der zweite Detektor in einem zweiten Strompfad von dem Verbraucher zu dem Steuergerät zwischen dem Verbraucher und dem Steuergerät angeordnet wird.

Bevorzugte Ausführungsformen der Erfindung werden nachfolgend anhand der beigefügten Zeichnungen näher erläutert. Es zeigen:
Fig. 1 eine schematische Darstellung eines elektrischen Systems mit einer Fehlererkennungsvorrichtung zum Erkennen eines Fehlers in einer elektrischen Baugruppe gemäß einer ersten Ausführungsform der Erfindung;
Fig. 2 eine schematische Darstellung eines elektrischen Systems mit einer Fehlererkennungsvorrichtung zum Erkennen eines Fehlers in einer elektrischen Baugruppe gemäß einer weiteren Ausführungsform der Erfindung; und
Fig. 3 eine schematische Darstellung eines elektrischen Systems mit einer Fehlererkennungsvorrichtung zum Erkennen eines Fehlers in einer elektrischen Baugruppe gemäß einer ersten Ausführungsform der Erfindung.

In den Figuren bezeichnen gleiche Bezugszeichen Elemente mit gleicher oder vergleichbarer Funktion.

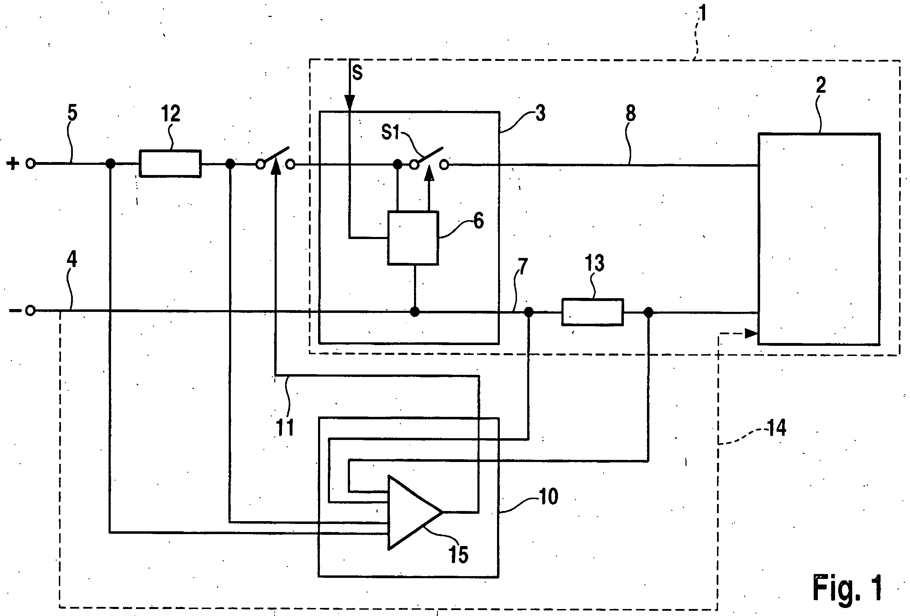

Fig. 1 zeigt eine elektrische Baugruppe 1 mit einem Verbraucher 2, z.B. einem Lüftermotor und einem Steuergerät 3, das über eine erste 4 und eine zweite Anschlussleitung 5 mit elektrischer Energie, z.B. mit einem elektrischen Gleichstrom, versorgt wird. Das Steuergerät 3 steuert den Verbraucher 2 gemäß einem bereitgestellten Stellwert S an, um dem Verbraucher 2 abhängig vom Stellwert S eine bestimmte elektrische Leistung zur Verfügung zu stellen. Beispielsweise kann das Steuergerät 3 mit Hilfe eines Steuermoduls 6 abhängig von dem

Stellwert S ein pulsweitenmoduliertes Signal erzeugen, mit dem ein erster Schalter S1 angesteuert, d.h. geöffnet oder geschlossen wird. Dabei bestimmt der Stellwert S das Tastverhältnis zwischen einem Ein-Zustand und einem Aus-Zustand des Schalters S1 in dem Steuergerät 3, d.h. abhängig von S wird die Zeitdauer, während der der Schalter S1 geschlossen ist und die Zeitdauer, während der der Schalter S1 geöffnet ist, während einer festgelegten Zykluszeit bestimmt. Der erste Schalter S1 im Steuergerät 3 ist vorzugsweise als Leistungstransistor ausgebildet. Alternativ kann das Steuergerät den Verbraucher auf sonstige z.B. von dem Stellwert S abhängigen Weise ansteuern, z.B. Ein- bzw. Ausschalten gemäß einer vorgegebenen Funktion.

Das Steuergerät 3 ist mit dem Verbraucher 2 über eine erste Verbindungsleitung 7 und eine zweite Verbindungsleitung 8 verbunden, um die elektrische Energie zuzuführen. Dabei ist im gezeigten Ausführungsbeispiel die erste Anschlussleitung 4 direkt durch das Steuergerät 3 mit der ersten Verbindungsleitung 7 verbunden und die zweite Anschlussleitung 5 über den ersten Schalter S1 mit der zweiten Verbindungsleitung 8 verbunden. Selbstverständlich ist es auch möglich den Schalter S1 in der Verbindung zwischen der ersten Anschlussleitung 4 und der ersten Verbindungsleitung 7 anzuordnen.

Um Fehlerfälle aufgrund von fehlerhaften Stromflüssen in der Baugruppe 1 zu detektieren, ist weiterhin eine Auslöseschaltung 10 vorgesehen, die abhängig von dem Erkennen eines Fehlerfalls einen Stromfluss durch die Baugruppe durch einen zweiten Schalter S2 unterbricht. Der zweite Schalter S2 ist in einer der Anschlussleitungen, z.B. in der zweiten Anschlussleitung, wie es in Fig. 1 gezeigt ist, angeschlossen. Der zweite Schalter S2 wird durch eine Steuerleitung 11 mit einem Steuersignal von der Auslöseeinheit 10 angesteuert, um den zweiten Schalter S2 in einem Auslösefall zu öffnen. Dadurch wird bei einem Fehlerfall die Zufuhr von elektrischer Energie in das Steuergerät 3 und zu dem Verbraucher 2 unterbrochen. Im Normalfall, d.h. wenn kein Fehler aufgetreten ist, ist der zweite Schalter S2 geschlossen.

Mithilfe eines ersten Detektors 12, der in der zweiten Zuführungsleitung 5 angeordnet ist und eines zweiten Detektors 13, der in der ersten Verbindungsleitung 7 zwischen dem Steuergerät 3 und dem Verbraucher 2 angeordnet ist, werden die Ströme auf der jeweiligen Leitung erfasst und in dem Auslösegerät 10 ausgewertet. Der erste Detektor 12 und der zweite Detektor 13 sind so angeordnet, dass zwischen ihnen die Strompfade des Verbrauchers 2, d.h. z.B. des Motors, und des Steuergeräts 3 angeordnet sind, sodass im Normalfall ein Stromabfluss auf dem Strompfad zwischen den beiden Detektoren 12, 13 zu einem Erkennen einer Stromdifferenz in dem Auslösegerät 10 führt. Das Erkennen der Stromdifferenz wird durch einen Vergleicher 15 in der Auslöseeinheit 10 durchgeführt, an dessen Ausgang das Steuersignal für den zweiten Schalters S2 anliegt. Das Auslösegerät 10 steuert dann in einem Fehlerfall, der durch das Erkennen einer Stromdifferenz definiert ist, den zweiten Schalter S2 an, um diesen zu öffnen.

So kann erkannt werden, wenn ein Abfluss des Stroms von dem Strompfad zwischen dem ersten Detektor 12 und bis zum zweiten Detektor 13, d.h. ein Abfließen eines Stroms in dem Verbraucher 2 bzw. aus dem Steuergerät 3 zu einem weiteren Potenzial, z.B. ein Massepotential, nicht über die entsprechende Anschlussleitung-bzw. Verbindungsleitung erfolgt. Z.B. könnte in einem Kraftfahrzeug über die Anschlussleitungen eine Gleichspannung angelegt sein und in dem Verbraucher 2 neben der Verbindungsleitung mit dem negativen (negativeren) Potential auch sonstige leitende Bereiche (Gehäuse und dergleichen) vorgesehen sein, die auf das negative Potential gelegt sind. Dies ist durch die gestrichelt gezeichnete Masseleitung 15 zwischen der ersten Anschlussleitung 4 und dem Verbraucher 2 verdeutlicht. Fließt ein Strom über die zweite Verbindungsleitung (positives (positiveres) Potential) über die Masseleitung 14 ab (was einem Masse-Nebenschluß im Verbraucher entspricht), so sind die Stromflüsse durch die Detektoren 12, 13 ungleich und ein Fehlerfall wird erkannt.

Da das Steuergerät 3 je nach Anwendung in einem nicht leitenden Gehäuse integriert ist, sind darin befindliche elektrische bzw. elektronische Elemente in der Regel floatend, d.h. interne Leiter können in der Regel nicht mit einem sonstigen Potenzial (wie z.B. dem negativen Potential) in Kontakt kommen, wenn es nicht über die Anschlussleitungen 4, 5 zugeführt wird. Jedoch ist es möglich, dass für das Steuergerät 2 auch ein weiterer Fehlerfall erkannt wird, bei dem ein Kurzschluss bzw. eine Strombrücke einen Fehlerstrom zwischen den beiden Potenzialen der Anschlussleitungen 4, 5 bewirkt. Dies kann durch die besondere Anordnung der Detektoren 12, 13 in einfacher Weise festgestellt werden, wobei der erste Detektor 12 vor dem Steuergerät 3 und der zweite Detektor 13 hinter dem Steuergerät 3 bezüglich der Anordnung des Steuergeräts 3 und des Verbrauchers 2 detektiert werden.

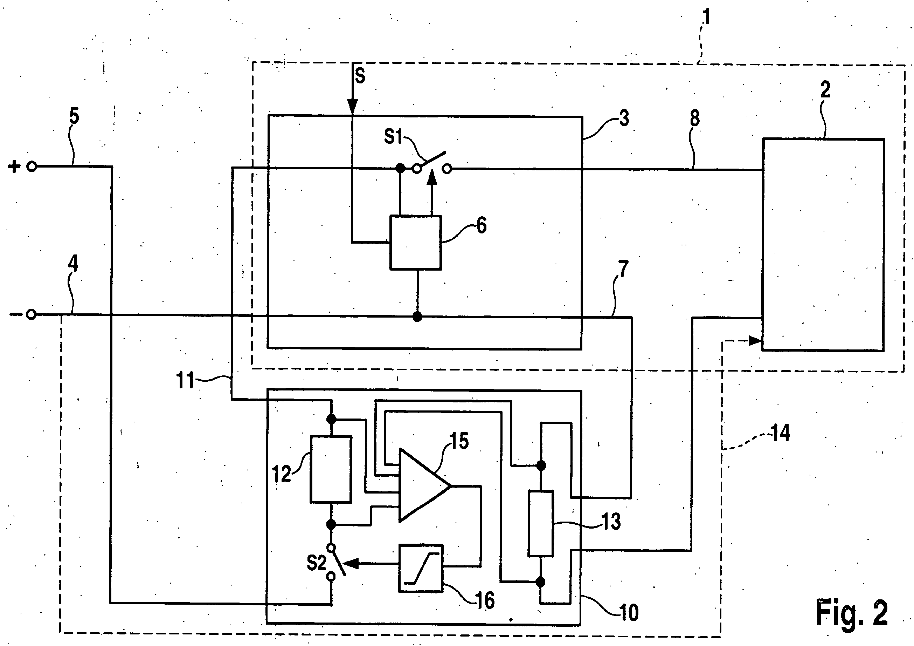

Die Detektoren 12, 13 können in den entsprechenden Leitungen angeordnet sein und über Signalleitungen mit dem Auslösegerät 10 verbunden sein. Alternativ können die entsprechenden stromführenden Leitungen durch das Steuergerät 10, wie in Fig. 2 gezeigt ist, geführt werden und dort gemessen und verglichen werden, um den Fehlerfall festzustellen. Weiterhin kann auch der zweite Schalter S2 in dem Steuergerät 2 angeordnet und entsprechend mit einem Vergleicher 15 verbunden sein.

Die Detektoren 12, 13 sind beispielsweise als Shunts, d.h. geeichte Messwiderstände, ausgebildet, an denen eine zum Strom proportionale Spannung gemessen werden kann, die über den Vergleicher 15 miteinander verglichen wird, um bei einer Abweichung der Spannungen voneinander einen Fehlerfall festzustellen. Eine für einen Fehlerfall relevante Abweichung kann dabei erst nach Überschreiten eines Differenz-Schwellwerts durch die detektierte Differenz erkannt werden. Mit anderen Worten kann beim Vergleichen der Ströme somit eine Toleranz berücksichtigt werden, sodass ein Auslösen nur erfolgt, wenn.die Stromdifferenz einen bestimmten Betrag überschreitet. Dies kann bei dem Verwenden von Shunts als Messwiderstände ein entsprechender Schwellwert für die Spannungsdifferenz sein. Das Vorsehen eines Differenz-Schwellwerts kann sinnvoll sein, wenn eine bestimmte Stromaufnahme durch das Steuermodul berücksichtigt werden soll, die Ursache einer durch die Auslöseeinheit 10 festgestellte Stromdifferenz sein kann.

Die im Vergleicher 15 detektierte (relevante) Spannungsdifferenz kann sofort zu einem Auslösen führen, bei dem der zweite Schalter S2 geöffnet wird. Alternativ kann die Spannungsdifferenz auch über einen Tiefpassfilter 16 gefiltert werden, der z.B. als ein Integrator ausgeführt sein kann, so dass das Auslösen erst erfolgt, wenn ein Integrationswert der Spannungsdifferenz über einen bestimmten Zeitraum einen bestimmten Schwellwert übersteigt.

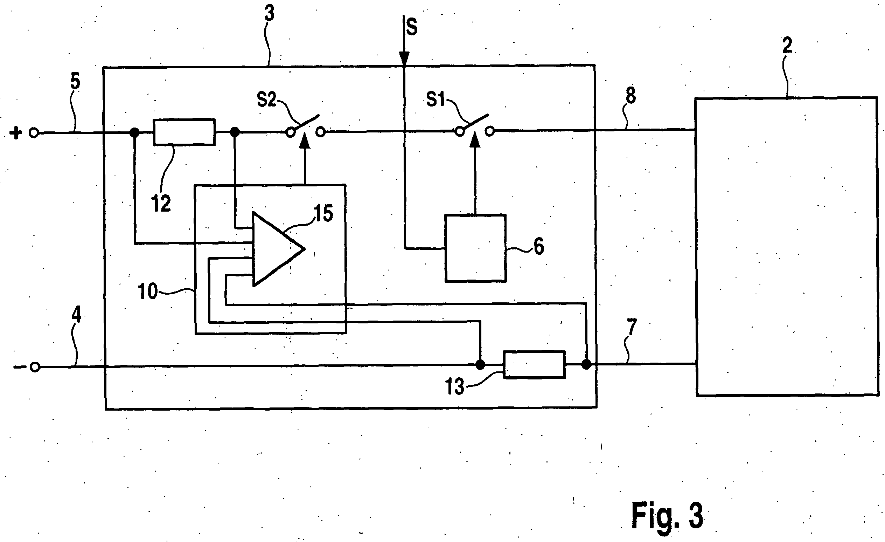

In Fig. 3 ist eine weitere Ausführungsform gezeigt, bei der die Auslöseschaltung 10 im Steuergerät 3 integriert ist. Dazu werden die Detektoren 12, 13, der zweite Schalter S2 sowie das Auslösegerät 10 ebenfalls im Steuergerät 3 vorgesehen. Der erste Detektor 12 ist im Steuergeräts 3 dann unmittelbar an dem Anschluss, an die zweite Anschlussleitung 5 angeschlössen ist, angeordnet, an dem die zweite Anschlussleitung 5 (bzw. die erste Anschlussleitung 4) angeschlossen wird. Der zweite Detektor 13 ist dann unmittelbar an dem Anschluss des Steuergeräts 3 angeordnet, an dem die erste Verbindungsleitung 7 (bzw. die zweite Verbindungsleitung 8) angeschlossen wird.

Das Steuergerät 3 kann mit einer Schlaf-Schaltung (nicht gezeigt) versehen sein, die bei abgeschaltetem Gesamtsystem das Steuergerät in eirien Stromsparmodus versetzt. Ein Aufwecken des Steuergeräts 3 kann durch Detektieren einer Spannung an dem ersten Detektor 12 erfolgen.

Die erfindungsgemäße Schaltung hat den Vorteil, dass sowohl Stromabflüsse im Verbraucher 2 zu weiteren Potenzialen zu einem Auslösefall führen, als auch ein interner Kurzschluss im Steuergerät 3, bei dem ein Teil des Stromes nicht durch den Verbraucher 2, sondern zwischen den internen Zuführungsleitungen fließt.

Als Detektoren sind in den obigen Ausführungsformen Messwiderstände (Shunts) vorgesehen und zur Ermittlung der Stromdifferenz wird der Vergleicher 15 verwendet, was insbesondere bei der Bereitstellung eines Gleichstroms als Versorgungsstrom sinnvoll ist. Die Detektion des fließenden Stroms und das Vergleichen kann auch durch andere Messverfahren vorgenommen werden. Z.B. kann bei Verwendung eines Wechselstrom als Versorgungsstrom eine Ringkernwicklung vorgesehen werden, wobei durch den Ringkern die beiden stromführenden Leitungen, an denen die Strommessung vorgenommen werden soll, geführt wird. In der Ringkernwicklung wird ein Differenzstrom induziert, aus dem das Steuersignal bestimmt wird. Auch können als Strom-Sensoren Hall-Sensoren, GMR-Sensoren (GMR: Giant Magneto Resistance) und dergleichen verwendet werden.

## Patentansprüche

1. Elektrisches System umfassend:
eine elektrische Baugruppe (1) mit einem Verbraucher (2) und einem Steuergerät (3) zum Ansteuern des Verbrauchers (2); und eine Fehlererkennungsvorrichtung zum Erkennen eines Fehlers in einer elektrischen Baugruppe (1) umfassend:
• einen ersten Detektor (12) und einen zweiten Detektor (13) zum Detektieren einer Angabe über Stromflüsse;
• eine Auslöseeinheit (10), um abhängig von den Angaben über die detektierten Stromflüsse mit Hilfe eines Schalters (S2) einen Stromfluss durch die elektrische Baugruppe (1) zu unterbrechen;
wobei der erste Detektor (12) auf einem ersten Strompfad von dem Steuergerät (3) zu dem Verbraucher (2) vor dem Steuergerät (3) angeordnet ist,
wobei der zweite Detektor (13) in einem zweiten Strompfad von dem Verbraucher (2) zu dem Steuergerät (3) zwischen dem Verbraucher (2) und dem Steuergerät (3) angeordnet ist.

2. Elektrisches System mit einer Fehlererkennungsvorrichtung nach Anspruch 1, wobei die Auslöseeinheit (10) einen Vergleicher (15) umfasst, um die Angaben über die detektierten Stromflüsse miteinander zu vergleichen und abhängig von einer Differenz der detektierten Stromflüsse-den Stromfluss durch die elektrische Baugruppe (1) zu unterbrechen, und weiterhin einen Integrator (16) umfasst, um das Ergebnis des Vergleichens zu integrieren, so dass der Schalter (S2) mit einer Tiefpass gefilterten Steuergröße angesteuert wird.

3. Elektrisches System mit einer Fehlererkennungsvorrichtung nach Anspruch 1 oder 2, wobei der erste und/oder zweite Detektor (12, 13) einen Shunt aufweist, durch den der zu messende Stromfluss geleitet wird, um eine von dem Stromfluss abhängige Messspannung bereitzustellen, wobei die Messspannung der Auslöseeinheit (10) bereitgestellt wird.

4. Elektrisches System mit einer Fehlererkennungsvorrichtung nach einem der Ansprüche 1 bis 3, wobei der erste und/oder zweite Detektor (12, 13) in der Auslöseeinheit (10) angeordnet sind.

5. Elektrisches System mit einer Fehlererkennungsvorrichtung nach Anspruch 1, wobei mindestens eines der Elemente der erste Detektor (12), der zweite Detektor (13) und die Auslöseeinheit (10) in dem Steuergerät (3) vorgesehen sind.

6. Elektrisches System mit einer Fehlererkennungsvorrichtung nach einem der Ansprüche 1 und 5, wobei das Steuergerät (3) über eine erste Anschlussleitung (4) mit einem ersten Gleichspannungspotential und über eine zweite Anschlussleitung (5) mit einem zweiten Gleichspannungspotential verbunden ist, und wobei der Verbraucher (2) mit dem Steuergerät (3) über eine erste Verbindungsleitung (7) und über eine zweite Verbindungsleitung (8) verbunden ist, wobei ein Steuermodul (6) vorgesehen ist, um elektrische Leistung an den Verbraucher (2) anzulegen, wobei die erste Anschlussleitung (4) und die erste Verbindungsleitung (7) direkt über das Steuergerät (3) verbunden sind, wobei der erste Detektor (12) in der zweiten Anschlussleitung (5) angeordnet ist und der zweite Detektor (13) in der ersten Verbindungsleitung (7) angeordnet ist

7. Verwendung einer Fehlererkennungsvorrichtung zum Erkennen eines Fehlers in einer elektrischen Baugruppe (1) umfassend:
• einen ersten Detektor (12) und einen zweiten Detektor (13) zum Detektieren einer Angabe über Stromflüsse;
• eine Auslöseeinheit (10), um abhängig von den Angaben über die detektierten Stromflüsse mit Hilfe eines Schalters (S2) einen Stromfluss durch die elektrische Baugruppe (1) zu unterbrechen,
wobei die elektrische Baugruppe (1)einen Verbraucher (2) und ein Steuergerät (3) zum Ansteuern des Verbrauchers (2) umfasst,
wobei der erste Detektor (12) auf einem ersten Strompfad von dem Steuergerät (3) zu dem Verbraucher (2) vor dem Steuergerät (3) angeordnet wird,
wobei der zweite Detektor (13) in einem zweiten Strompfad von dem Verbraucher (2) zu dem Steuergerät (3) zwischen dem Verbraucher (2) und dem Steuergerät (3) angeordnet wird.

## Claims

1. Electrical system comprising:
an electrical assembly (1) having a load (2) and a control device (3) for driving the load (2); and a fault identification apparatus for identifying a fault in an electrical assembly (1), comprising:
• a first detector (12) and a second detector (13) for detecting information about current flows;
• a tripping unit (10) in order to interrupt a current flow through the electrical assembly (1) with the aid of a switch (S2) depending on the information about the detected current flows;
wherein the first detector (12) is arranged on a first current path from the control device (3) to the load (2) upstream of the control device (3),
wherein the second detector (13) is arranged in a second current path from the load (2) to the control device (3) between the load (2) and the control device (3).

2. Electrical system comprising a fault identification apparatus according to Claim 1, wherein the tripping unit (10) comprises a comparator (15) in order to compare the items of information about the detected current flows with one another and to interrupt the current flow through the electrical assembly (1) depending on a difference between the detected current flows, and further comprises an integrator (16) in order to integrate the result of the comparison, so that the switch (S2) is driven with a low-pass-filtered control variable.

3. Electrical system comprising a fault identification apparatus according to Claim 1 or 2, wherein the first and/or second detector (12, 13) have/has a shunt through which the current flow which is to be measured is conducted in order to provide a measurement voltage which is dependent on the current flow, wherein the measurement voltage is supplied to the tripping unit (10).

4. Electrical system comprising a fault identification apparatus according to one of Claims 1 to 3, wherein the first and/or second detector (12, 13) are/is arranged in the tripping unit (10).

5. Electrical system comprising a fault identification apparatus according to Claim 1, wherein at least one of the elements from amongst the first detector (12), the second detector (13) and the tripping unit (10) is provided in the control device (3).

6. Electrical system comprising a fault identification apparatus according to one of Claims 1 to 5, wherein the control device (3) is connected to a first DC voltage potential by means of a first connection line (4) and to a second DC voltage potential by means of a second connection line (5), and wherein the load (2) is connected to the control device (3) by means of a first connecting line (7) and by means of a second connecting line (8), wherein a control module (6) is provided in order to apply electrical power to the load (2), wherein the first connection line (4) and the first connecting line (7) are directly connected by means of the control device (3), wherein the first detector (12) is arranged in the second connection line (5) and the second detector (13) is arranged in the first connecting line (7).

7. Use of a fault identification apparatus for identifying a fault in an electrical assembly (1), comprising:
• a first detector (12) and a second detector (13) for detecting information about current flows;
• a tripping unit (10) in order to interrupt a current flow through the electrical assembly (1) with the aid of a switch (S2) depending on the information about the detected current flows,
wherein the electrical assembly (1) comprises a load (2) and a control device (3) for driving the load (2),
wherein the first detector (12) is arranged on a first current path from the control device (3) to the load (2) upstream of the control device (3),
wherein the second detector (13) is arranged in a second current path from the load (2) to the control device (3) between the load (2) and the control device (3).

## Revendications

1. Système électrique comprenant :
un composant électrique (1) comportant une charge (2) et un appareil de commande (3) destiné à commander la charge (2) ; et un dispositif de détection de défaut destiné à détecter un défaut dans un composant électrique (1), comprenant :
• un premier détecteur (12) et un second détecteur (13) destinés à détecter une donnée concernant des courants ;
• une unité de déclenchement (10) destinée à interrompre un courant passant à travers le composant électrique (1) en fonction des données concernant les courants détectés, au moyen d'un commutateur (S2) ;
dans lequel le premier détecteur (12) est disposé sur un premier trajet de courant allant de l'appareil de commande (3) à la charge (2) en amont de l'appareil de commande (3),
dans lequel le second détecteur (13) est disposé sur un second trajet de courant allant de la charge (2) à l'appareil de commande (3), entre la charge (2) et l'appareil de commande (3).

2. Système électrique comportant un dispositif de détection de défaut selon la revendication 1, dans lequel l'unité de déclenchement (10) comprend un comparateur (15) destiné à comparer les uns aux autres les courants détectés et à interrompre le courant passant à travers le composant électrique (1) en fonction d'une différence entre les courants détectés, et comprend en outre un intégrateur (16) destiné à intégrer le résultat de la comparaison de manière à ce que le commutateur (S2) soit commandé au moyen d'une grandeur de commande filtrée par filtrage passe-bas.

3. Système électrique comportant un dispositif de détection de défaut selon la revendication 1 ou 2, dans lequel le premier et/ou le second détecteur (12, 13) comportent un shunt à travers lequel le courant à mesurer est amené à passer afin de fournir une tension de mesure dépendant du courant, dans lequel la tension de mesure est fournie à l'unité de déclenchement (10).

4. Système électrique comportant un dispositif de détection de défaut selon l'une quelconque des revendications 1 à 3, dans lequel le premier et/ou le second détecteur (12, 13) est disposé dans l'unité de déclenchement (10).

5. Système électrique comportant un dispositif de détection de défaut selon la revendication 1, dans lequel au moins l'un des éléments du premier détecteur (12), du second détecteur (13) et de l'unité de déclenchement (10) est prévu dans l'appareil de commande (3).

6. Système électrique comportant un dispositif de détection de défaut selon l'une quelconque des revendications. 1 à 5, dans lequel l'appareil de commande (3) est connecté par l'intermédiaire d'une première ligne de raccordement (4) à un premier potentiel continu et par l'intermédiaire d'une seconde ligne de raccordement (5) à un second potentiel continu, et dans lequel la charge (2) est connectée à l'appareil de commande (3) par l'intermédiaire d'une première ligne de connexion (7) et par l'intermédiaire d'une seconde ligne de connexion (8), dans lequel il est prévu un module de commande (6) destiné à appliquer une puissance électrique à la charge (2), dans lequel la première ligne de raccordement (4) et la première ligne de connexion (7) sont directement connectées par l'intermédiaire de l'appareil de commande (3), dans lequel le premier détecteur (12) est disposé dans la seconde ligne de raccordement (5) et le second détecteur (13) est disposé dans la première ligne de connexion (7).

7. Utilisation d'un dispositif de détection de défaut destiné à détecter un défaut dans un composant électrique (1) comprenant :
• un premier détecteur (12) et un second détecteur (13) destinés à détecter une donnée concernant des courants ;
• une unité de déclenchement (10) destinée à interrompre un courant passant à travers le composant électrique (1) en fonction des données concernant les courants détectés, au moyen d'un commutateur (S2) ;
dans lequel le composant électrique (1) comprend une charge (2) et un appareil de commande (3) destiné à commander la charge (2),
dans lequel le premier détecteur (12) est disposé sur un trajet de courant allant de l'appareil de commande (3) à la charge (2) en amont de l'appareil de commande (3),
dans lequel le second détecteur (13) est disposé sur un second trajet de courant allant de la charge (2) à l'appareil de commande (3), entre la charge (2) et l'appareil de commande (3).
